# EUROPÄISCHE PATENTSCHRIFT

(11) **EP 1 827 917 B1**
(45) Veröffentlichungstag und Bekanntmachung des Hinweises auf die Patenterteilung: **24.02.2010**
(21) Anmeldenummer: 05803949.6
(22) Anmeldetag: 15.11.2005
(51) Int. Cl.: B60R 21/16

(54) **AIRBAGMODUL**
AIRBAG MODULE
MODULE D'AIRBAG

(30) Priorität: 24.12.2004 DE 102004062569
(43) Veröffentlichungstag der Anmeldung: 05.09.2007
(73) Patentinhaber: AUTOLIV DEVELOPMENT AB, 447 83 Vargarda (SE)
(72) Erfinder: PALO, Anders, 41271 Göteborg (SE); SVANTESSON, Jonas, S-441 41 Alingsas (SE)
(74) Vertreter: Stornebel, Kai
(86) Internationale Anmeldenummer: PCT/EP2005/012251
(87) Internationale Veröffentlichungsnummer: WO 2006/074750

(56) Entgegenhaltungen:
- EP-A- 1 426 246
- US-A- 5 797 621
- US-A1- 2003 001 364
- PATENT ABSTRACTS OF JAPAN Bd. 018, Nr. 602 (M-1705), 16. November 1994 (1994-11-16) -& JP 06 227344 A (TOYOTA MOTOR CORP), 16. August 1994 (1994-08-16)

## Beschreibung

Die Erfindung betrifft ein Airbagmodul zum Einbau in ein Kraftfahrzeug mit einem durch einen Gasgenerator aufblasbaren, sich flach entfaltenden Gassack, der unterhalb einer Fensterscheibe eines Kraftfahrzeuges anzuordnen ist und sich im aufgeblasenen Zustand vor den Fensterausschnitt legt. Ein solches Airbagmodul ist insbesondere als ein Seitenairbagmodul zum Schutz eines Fahrzeuginsassen bei einem Seitenaufprall oder bei einem Überschlag geeignet.

Aus der DE 42 23 620 A1 ist eine Airbagvorrichtung bekannt, die in gefaltetem Zustand in einem Raum in einer Tür oder in einer Armlehne seitlich von einem Fahrzeuginsassen in einem Fahrgastraum untergebracht ist. Über einen Gasgenerator wird im Falle eines Unfalles der Luftsack aufgeblasen. Der aufgeblasene Luftsack füllt einen Raum zwischen dem Fahrzeuginsassen und der Tür oder der Seitenwand des Fahrzeuges aus, so dass der Fahrzeuginsasse bei einem Seitenaufprall durch den Luftsack abgefangen und vor einer Verletzung geschützt wird.

Eine solche Airbagvorrichtung, auch Seitenairbag genannt, wird im Falle hoher Querbeschleunigungen aktiviert, die über einen Beschleunigungssensor detektiert wird. Überschreiten diese Beschleunigungswerte einen Grenzwert, wird ein Gasgenerator aktiviert, der innerhalb kürzester Zeit gezündet wird und den Gassack mit Füllgas aufbläst. Beim Aufblasen reißt eine Abdeckung bzw. Verkleidung an einer definieren Stelle auf und gibt den Weg für den sich mit Gas füllenden Gassack frei. Der Gassack schützt dann den Insassen bei einem Anprall gegen ein Karosserieteil oder gegen zersplitterndes Fensterglas ebenso wie gegen ein Herausgleiten aus einem zerstörten Fenster.

Die US 5,797,621 ebenso wie die JP 06227344 A1 beschreiben einen Seitenairbag mit einem Gasgenerator und einem sich entfaltenden Gassack, der sich im aufgeblasenen Zustand vor einem Fensterausschnitt legt, bei denen zwischen der Fensterscheibe und dem Gassack eine Schutzschicht angeordnet ist.

Aufgabe der vorliegenden Erfindung ist es, einen bekannten Seitenairbag hinsichtlich seiner Zuverlässigkeit zu verbessern.

Erfindungsgemäß wird diese Aufgabe durch ein Airbagmodul mit den Merkmalen des Anspruchs 1 gelöst. Weiterbildungen der Erfindung sind in den Unteransprüchen beschrieben.

Das erfindungsgemäße Airbagmodul in einem Kraftfahrzeug mit einem durch einen Gasgenerator aufblasbaren, sich entfaltenden Gassack, der unterhalb einer Fensterscheibe des Kraftfahrzeuges angeordnet ist und sich im aufgeblasenen Zustand vor den Fensterausschnitt legt, sieht vor, dass zumindest auf einer Seite des Gassackes eine zusätzliche Schutzschicht angeordnet ist, wobei der Gassack im nicht aufgeblasenen Zustand aufgerollt ist. Beim Aufblasen bzw. Entfalten eines Gassackes im Bereich eines Fahrzeugfensters besteht die Gefahr, dass der Gassack durch Glassplitter oder durch andere, vorstehende und scharfkantige Elemente beschädigt wird. Das Risiko einer Beschädigung ist bei einem unterhalb eines Fensterausschnittes angeordneten Gassackes wesentlich größer als bei einem im Dachbereich angeordneten Seitenairbag, da diese durch die B-Säule von dem umherfliegenden Glas weggeleitet werden. Durch die Schutzschicht wird ein Zerschneiden des Gassackes verhindert bzw. die Gefahr eines Zerschneidens verringert, wodurch die Zuverlässigkeit eines Airbagmoduls und damit die Fahrzeuginsassensicherheit erhöht werden. Es ist vorgesehen, dass die Schutzschicht im aufgerollte Zustand den Gassack umhüllt, so dass der sich entfaltende Gassack bei dem Durchtritt durch die Sollbruchstelle gegen scharfkantige Objekte geschützt ist.

Vorteilhafterweise ist die Schutzschicht auf der im aufgeblasenen Zustand des Gassackes dem Fenster zugewandten Seite des Gassackes angeordnet, da dort das Risiko einer Zerstörung des Gassackes durch ein zerstörtes Fenster besonders hoch ist.

Insbesondere vorteilhaft ist die Anordnung eines Gassackes in einer Fahrzeugtür, um die Fahrzeuginsassen wirkungsvoll bei einem Seitenaufprall oder einem Überschlag zu schützen. Es ist vorgesehen, dass die Schutzschicht als eine Gewebeschicht ausgebildet ist, die auf dem Gassack aufgenäht oder an dem Gassack angenäht sein kann. Bei einer einseitigen Anordnung einer Schutzschicht besteht ein aufgeblasener Gassack aus drei Gewebeschichten. Bei einer Anordnung einer Schutzschicht jeweils auf der Innen- und Außenseite des Gassackes sind vier Gewebelagen vorhanden. Alternativ zu einem Annähen kann die Schutzschicht bzw. können die Schutzschichten auch angeklebt sein.

Nachfolgend werden Ausführungsbeispiele der Erfindung anhand der beigefügten Figuren näher erläutert. Es zeigen:
- Figur 1 -: eine Seitenansicht eines erfindungsgemäßen Airbag- moduls;
- Figur 2 -: eine Schnittdarstellung eines sich entfaltenden Gas- sacks; sowie
- Figuren 3 und 4 -: erfindungsgemäße Airbagmodule im aufgerollten Zu- stand.

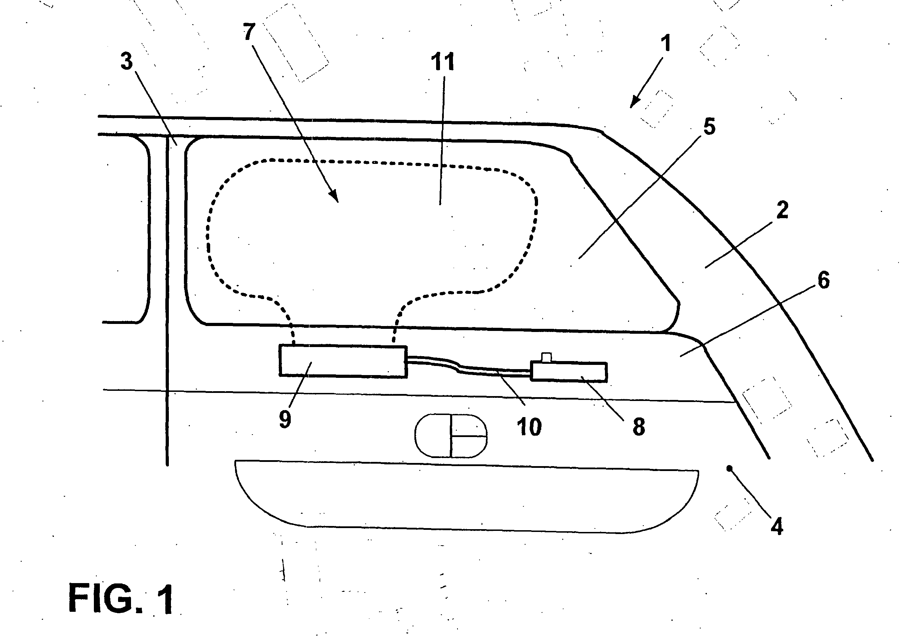

Figur 1 zeigt ein teilweise dargestelltes Fahrzeug 1 mit einer A-Säule 2 und einer B-Säule 3, zwischen denen ein nicht dargestellter Fahrersitz angeordnet ist. In dem Bereich zwischen der A-Säule 2 und der B-Säule 3 ist eine Fahrzeugtür 4 angeordnet, die gelenkig an der A-Säule gelagert ist. Die Fahrzeugtür 4 sieht ein Türfenster 5 und eine darunter angeordnete Türbrüstung 6 vor.

Innerhalb der Türbrüstung 6 ist ein Airbagmodul 7 angeordnet, das im wesentlichen aus einem in die Türbrüstung 6 eingesetzten Gasgenerator 8 und einem Gassackbehälter 9 besteht, die durch ein Zuleitungsrohr 10 miteinander verbunden sind. Im Falle einer abrupten Verzögerung oder einer hohen Querbeschleunigung des Kraftfahrzeuges 1 wird ein aus dem Gassackbehälter 9 hervortretender Gassack 11 aufgeblasen, indem ein im Gasgenerator 8 erzeugtes Gas über das Zuleitungsrohr 10 in den Gassack 11 geleitet wird. Der aufgeblasene Gassack 11 erstreckt sich im aufgeblasenen Zustand vorteilhafterweise über den gesamten Fensterausschnitt des Fensters 5.

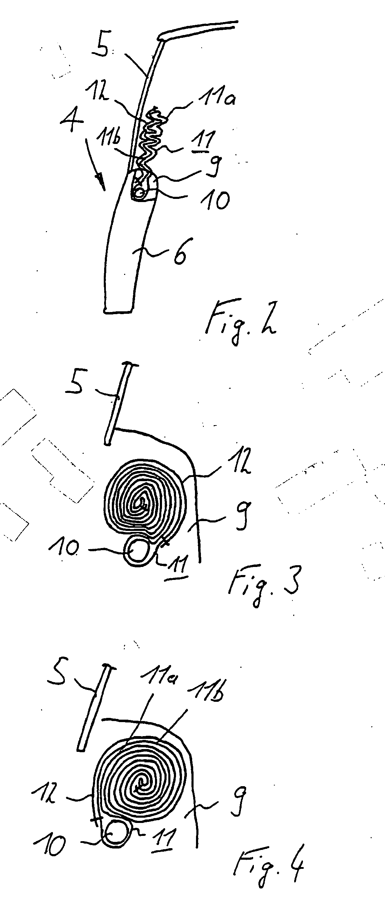

In der Figur 2 ist eine Schnittdarstellung der Tür 4 gezeigt, aus der zu entnehmen ist, dass innerhalb der Türbrüstung 6 der Gassackbehälter 9 ausgebildet ist, in dem der Gassack 11 in einem gefalteten Zustand gelagert ist, bis er aktiviert wird. Die Figur 2 zeigt den Gassack 11 in einem teilentfalteten Zustand, in der er sich noch nicht über die Gesamthöhe des Fensters 5 erstreckt. Der Gassack 11 besteht aus zwei Gewebelagen 11 a, 11 b, die entweder über eine nicht dargestellte Umfangsnaht miteinander vernäht sind oder die einstückig zu einem Gassack 11 gewoben sind. Auf der dem Fenster 5 zugewandten Seite des Gassackes 11 ist eine weitere Gewebeschicht 12 als eine Schutzschicht angeordnet, vorliegend an der Gassackschicht 11 b angenäht. Bei einem Seitenaufprall besteht die Gefahr, dass das Fenster 5 zerspringt, bevor sich der Gassack 11 vollständig entfaltet hat, da es aufgrund der engen räumlichen Abmessungen bei hohen Querbeschleunigungen schnell zu einem Bruchversagen der Fensterscheibe 5 kommt. Umherfliegendes Glas oder andere Karosseriesplitter können dann den sich entfaltenden Gassack 11 beschädigen. Dieses wird durch die Schutzschicht 12, vorzugsweise ein bruchfestes Gewebe, verhindert, zumindest wird der Gassack 11 wirksam geschützt.

In der Figur 3 ist der Gassack 11 in einem aufgerollten Zustand gezeigt, bevor Gas aus dem Gasgenerator 8 durch das Zuleitungsrohr 10 in den Gassack eingeleitet wird. In dem Ausführungsbeispiel der Figur 3 ist der Gassack 11 entgegen dem Uhrzeigersinn eingerollt und die Schutzschicht 12 so angeordnet, dass sie den Gassack 11 umhüllt. Somit wird bei dem Entrollen des Gassackes 11 stets bewirkt, dass die Schutzschicht 12 dem Fenster 5 bei dem Entrollvorgang zugewandt ist. Nach dem Entrollen ist die Schutzschicht 12 oder das Schutzgewebe auf der dem Fahrzeuginsassen zugewandten Seite angeordnet.

Eine alternative Anordnung ist in der Figur 4 dargestellt, bei der der Gassack 11 im Uhrzeigersinn eingerollt ist und die Schutzschicht 12 ebenfalls den Gassack 11 im eingerollten Zustand umhüllt. Beim Entrollen wird ebenfalls zunächst die Schutzschicht 12 durch einen sich öffnenden Spalt in dem Gassackbehälter 9 bzw, in der Türverkleidung hindurch geführt und bleibt dem Fenster 5 zugewandt. Hierdurch wird ein optimaler Schutz sowohl beim Entfalten als auch im entfalteten Zustand für den Gassack 11 und damit auch für den Fahrzeuginsassen bereitgestellt. Statt einer aufgenähten Schutzschicht 12 kann diese auch aufgeklebt sein. Die Schutzschicht 12 kann über den gesamten Gassack11 oder an ausgewählten Bereichen des Gassackes 11 angeordnet sein, beispielsweise wenn sich herausgestellt hat, dass Beschädigungen nur in einem bestimmten Bereich des Gassackes 11 zu erwarten sind.

## Patentansprüche

1. Airbagmodul zum Einbau in einem Kraftfahrzeug mit einem durch einen Gasgenerator (8) aufblasbaren, sich flach entfaltenden Gassack (11), der unterhalb einer Fensterscheibe (5) eines Kraftfahrzeuges anzuordnen ist und sich im aufgeblasenen Zustand vor den Fensterausschnitt legt, wobei auf zumindest einer Seite des Gassackes (11) eine Schutzschicht (12) angeordnet ist, **dadurch gekennzeichnet, dass** der Gassack (11) im nicht aufgeblasenen Zustand aufgerollt ist und die Schutzschicht (12) im aufgerollten Zustand den Gassack (11) umhüllt.

2. Airbagmodul nach Anspruch 1, **dadurch gekennzeichnet, dass** die Schutzschicht (12) auf der im aufgeblasenen Zustand des Gassackes (11) dem Fenster (5) zugewandten Seite des Gassackes (11) angeordnet ist.

3. Airbagmodul nach Anspruch 1 oder 2, **dadurch gekennzeichnet, dass** der Gassack (11) in einer Fahrzeugtür (4) angeordnet ist.

4. Airbagmodul nach einem der voranstehenden Ansprüche, **dadurch gekennzeichnet, dass** die Schutzschicht (12) als eine Gewebeschicht ausgebildet ist.

5. Airbagmodul nach einem der voranstehenden Ansprüche, **dadurch gekennzeichnet, dass** die Schutzschicht (12) an dem Gassack (11) angenäht oder angeklebt ist.

## Claims

1. Airbag module for installation in a motor vehicle having an airbag (11) which can be inflated by means of a gas generator (8), unfolds in a flat manner, is to be arranged underneath a window pane (5) of a motor vehicle and in the inflated state is located in front of the window cutout, wherein a protective layer (12) is arranged on at least one side of the airbag (11), **characterized in that** in the uninflated state the airbag (11) is rolled up, and in the rolled-up state the protective layer (12) encloses the airbag (11).

2. Airbag module according to Claim 1, **characterized in that** the protective layer (12) is arranged on the side of the airbag (11) facing the window (5) in the inflated state of the airbag (11).

3. Airbag module according to Claim 1 or 2, **characterized in that** the airbag (11) is arranged in a vehicle door (4).

4. Airbag module according to one of the preceding claims, **characterized in that** the protective layer (12) is embodied as a fabric layer.

5. Airbag module according to one of the preceding claims, **characterized in that** the protective layer (12) is sewn or bonded onto the air bag (11).

## Revendications

1. Module de coussin gonflable destiné à être mis en place dans un véhicule automobile, comprenant un sac de gaz (11) pouvant être gonflé par un générateur de gaz (8), se dépliant à plat, qui est à agencer sous une vitre de fenêtre (5) d'un véhicule automobile et qui à l'état gonflé prend place devant l'ouverture de fenêtre, une couche de protection (12) étant agencée sur au moins un côté du sac de gaz (11), **caractérisé en ce qu'**à l'état non gonflé le sac de gaz (11) est enroulé et la couche de protection (12) entoure le sac de gaz (11) à l'état enroulé.

2. Module de coussin gonflable selon la revendication 1, **caractérisé en ce que** la couche de protection (12) est agencée sur le côté du sac de gaz (11) tourné vers la fenêtre (5) à l'état gonflé du sac de gaz (11).

3. Module de coussin gonflable selon la revendication 1 ou 2, **caractérisé en ce que** le sac de gaz (11) est agencé dans une portière de véhicule (4).

4. Module de coussin gonflable selon l'une des revendications précédentes, **caractérisé en ce que** la couche de protection (12) est formée en tant qu'une couche de tissu.

5. Module de coussin gonflable selon l'une des revendications précédentes, **caractérisé en ce que** la couche de protection (12) est collée ou cousue sur le sac de gaz (11).
